# EUROPEAN PATENT APPLICATION

(11) **EP 4 120 483 A1**
(43) Date of publication of application: **18.01.2023**
(21) Application number: 20927731.8
(22) Date of filing: 23.03.2020
(51) Int. Cl.: H01R 13/516, H01R 27/00, H01R 13/631

(54) **MODULAR CAR DOOR CONNECTOR, METHOD FOR FABRICATING MODULAR CAR DOOR CONNECTOR, AND METHOD FOR MOUNTING MODULAR CAR DOOR CONNECTOR**

(71) Applicant: Huawei Technologies Co., Ltd., Shenzhen, Guangdong 518129 (CN)
(72) Inventor: HUANG, Dong, Shenzhen, Guangdong 518129 (CN)
(74) Representative: Pfenning, Meinig & Partner mbB
(86) International application number: PCT/CN2020/080731
(87) International publication number: WO 2021/189204

(57) **Abstract**

This application provides a modular vehicle door connector, applied to the field of vehicles, such as an electric vehicle and an energy-saving vehicle. The modular vehicle door connector is configured to connect a vehicle door harness and a vehicle body harness, and movable standard modules with different functions may be inserted in the modular vehicle door connector. When a vehicle is upgraded and updated, a corresponding functional module may be inserted in the modular vehicle door connector, thereby reducing upgrade costs of the vehicle. The modular vehicle door connector includes a female connector and a male connector. The female connector includes a plurality of female standard sub-cavities. Space sizes of the plurality of female standard sub-cavities are the same. A fixed baffle plate is disposed between two adjacent female standard sub-cavities in the plurality of female standard sub-cavities. The male connector includes a plurality of male standard sub-cavities, Space sizes of the plurality of male standard sub-cavities are the same as the space sizes of the plurality of female standard sub-cavities. A fixed baffle plate is disposed between two adjacent male standard sub-cavities in the plurality of male standard sub-cavities.

## Description

### TECHNICAL FIELD

This application relates to the field of vehicles, and more specifically, to a modular vehicle door connector, a standard functional module, a method for manufacturing a modular vehicle door connector, and a method for mounting a modular vehicle door connector.

### BACKGROUND

Vehicle door wiring means connecting a vehicle door harness to a vehicle body harness. Currently, there are two comparatively common forms of vehicle door wiring: a wiring mode using a rubber sleeve and a wiring mode using a vehicle door connector. In the wiring mode using a rubber sleeve, a vehicle door harness passes through a rubber sleeve and connects to a vehicle body harness in a cabin. In the wiring mode using a vehicle door connector, an electrical signal connection is performed near a vehicle door through interconnection by using a connector. The vehicle door connector is configured to connect a vehicle door harness to an entire-vehicle harness to ensure normal operating of an electrical component on the vehicle door. An interface and an internal structure of the vehicle door connector are fixed.

Both the wiring mode using a rubber sleeve and the wiring mode using a connector have simple forms and limited wiring functions, and therefore cannot implement functional upgrades or functional extensions. When a vehicle model is modified and a function of a vehicle door is upgraded, new versions need to be made for both the existing vehicle door wiring modes, thereby increasing upgrade costs.

### SUMMARY

This application provides a modular vehicle door connector, a standard functional module, a method for mounting a modular vehicle door connector on a vehicle, and a method for manufacturing a modular vehicle door connector.

According to a first aspect, a modular vehicle door connector is used in the field of vehicles. The modular vehicle door connector is configured to connect a vehicle door harness to a vehicle body harness, and includes a female connector and a male connector. The female connector includes a plurality of female standard sub-cavities. Space sizes of the plurality of female standard sub-cavities are the same. A fixed baffle plate is disposed between two adjacent female standard sub-cavities in the plurality of female standard sub-cavities. The plurality of female standard sub-cavities are configured to mount female standard functional modules. The male connector includes a plurality of male standard sub-cavities. Space sizes of the plurality of male standard sub-cavities are the same as the space sizes of the plurality of female standard sub-cavities. A fixed baffle plate is disposed between two adjacent male standard sub-cavities in the plurality of male standard sub-cavities. The plurality of male standard sub-cavities are configured to mount male standard functional modules.

Therefore, a plurality of standard sub-cavities are disposed on each of the female connector and the male connector of the vehicle door connector, and the plurality of standard sub-cavities are configured to insert different standard functional modules according to a requirement of a vehicle, so that when the vehicle is upgraded and updated, corresponding standard functional modules can be inserted according to an upgrade requirement of the vehicle, thereby avoiding upgrade costs caused by replacement of an existing vehicle door connector that cannot meet a new requirement of the vehicle. In addition, the modular vehicle door connector is more convenient than a wiring mode using a rubber sleeve, the connector is comparatively easy to mount and remove, and a vehicle door is easy to remove and maintain. The vehicle door can be removed without removing interior trim. Functional requirements for a power supply, a signal, a high speed, and the like can be flexibly configured for vehicle models with different configurations, and harness functions can be added or deleted. The vehicle door connector is managed in a platform-based normalized manner.

With reference to the first aspect, in some implementations of the first aspect, a first floating tolerance spring is disposed on a side wall of each of the plurality of female standard sub-cavities included in the female connector. The first floating tolerance spring is configured to limit an elastic floating tolerance of the female standard functional module in an X direction. The X direction is parallel to a mating surface of the female connector and parallel to the top and the bottom of the female connector. A second floating tolerance spring is disposed on the fixed baffle plate of the female connector. The second floating tolerance spring is configured to limit an elastic floating tolerance of the female standard functional module in a Y direction. The Y direction is parallel to the mating surface of the female connector and perpendicular to the top and the bottom of the female connector.

In this implementation, the floating tolerance spring disposed on the side wall of each of the plurality of standard sub-cavities and floating tolerance springs disposed on the plurality of fixed baffle plates are configured to limit elastic floating tolerances of female standard functional modules in the X direction and the Y direction, so that matched male modules can be more properly inserted in the plurality of female standard functional modules in the X direction and the Y direction.

With reference to the first aspect, in some implementations of the first aspect, the female connector further includes a module limiting structure. The module limiting structure is located on a lower surface of the female connector. The module limiting structure is configured to limit a location of the female standard functional module in a Z direction. The Z direction is perpendicular to the mating surface of the female connector.

In this implementation, with the floating tolerance spring disposed on the side wall of each of the plurality of standard sub-cavities, the floating tolerance springs disposed on the plurality of fixed baffle plates, and the module limiting structure, in a process of inserting matched male modules in female standard functional modules, independent floating of a plurality of modules is implemented, thereby implementing smooth connection and insertion of the plurality of modules and avoiding interference.

With reference to the first aspect, in some implementations of the first aspect, the female connector further includes a plurality of female standard functional modules. A volume of each of the plurality of female standard functional modules is an integer multiple of that of the female standard sub-cavity. Module guiding corners are disposed around a side, connected to the male standard functional module, of each of the plurality of female standard functional modules. A spring clamping slot is disposed on a side surface of each female standard functional module. The side surface of each female standard functional module is a surface of the female standard functional module in the Z direction. The Z direction is perpendicular to the mating surface of the female connector.

The spring clamping slot is configured to clamp the floating tolerance spring disposed on the side wall of each standard sub-cavity of the female connector and the floating tolerance spring disposed on the fixed baffle plate of the female connector, to implement coarse limiting of the standard functional module. When a relative location of the standard functional module falls within a range of the guiding slot, an elastic floating tolerance structure cooperates with the guiding corners for guiding, to ensure normal matching.

With reference to the first aspect, in some implementations of the first aspect, the male connector further includes a plurality of male standard functional modules. A volume of each of the plurality of male standard functional modules is an integer multiple of that of the male standard sub-cavity. The plurality of male standard functional modules and the plurality of female standard functional modules have corresponding functions.

With reference to the first aspect, in some implementations of the first aspect, the male connector further includes a plurality of male standard functional modules. A volume of each of the plurality of male standard functional modules is an integer multiple of that of a standard sub-cavity.

With reference to the first aspect, in some implementations of the first aspect, the female connector further includes a plurality of female standard functional modules. A volume of each of the plurality of female standard functional modules is an integer multiple of that of the female standard sub-cavity. The plurality of female standard functional modules and the plurality of male standard functional modules have corresponding functions. Module guiding corners are disposed around a side, connected to the male standard functional module, of each of the plurality of female standard functional modules. A spring clamping slot is disposed on a side surface of each female standard functional module. The side surface of the female standard functional module is a surface of the female standard functional module in the Z direction. The Z direction is perpendicular to the mating surface of the female connector.

With reference to the first aspect, in some implementations of the first aspect, a first floating tolerance spring is disposed on a side wall of each of the plurality of male standard sub-cavities included in the male connector. The first floating tolerance spring is configured to limit an elastic floating tolerance of the male standard functional module in the X direction. The X direction is parallel to a mating surface of the male connector and parallel to the top and the bottom of the male connector. A second floating tolerance spring is disposed on the fixed baffle plate of the male connector. The second floating tolerance spring is configured to limit an elastic floating tolerance of the male standard functional module in a Y direction. The Y direction is parallel to the mating surface of the male connector and perpendicular to the top and the bottom of the male connector.

With reference to the first aspect, in some implementations of the first aspect, the male connector further includes a module limiting structure. The module limiting structure is located on a lower surface of the male connector. The module limiting structure is configured to limit a location of the male standard functional module in a Z direction. The Z direction is perpendicular to the mating surface of the male connector.

With reference to the first aspect, in some implementations of the first aspect, the male connector further includes a plurality of male standard functional modules. A volume of each of the plurality of male standard functional modules is an integer multiple of that of the male standard sub-cavity. Module guiding corners are disposed around a side, connected to the female standard module, of each of the plurality of male standard functional modules. A spring clamping slot is disposed on a side surface of each male standard functional module. The side surface of each male standard functional module is a surface of each male standard functional module in the Z direction. The Z direction is perpendicular to the mating surface of the male connector.

With reference to the first aspect, in some implementations of the first aspect, the female connector further includes a plurality of female standard functional modules. A volume of each of the plurality of female standard functional modules is an integer multiple of that of the female standard sub-cavity. The plurality of female standard functional modules correspond to the plurality of male standard functional modules.

With reference to the first aspect, in some implementations of the first aspect, the female connector further includes a plurality of female standard functional modules. A volume of each of the plurality of female standard functional modules is an integer multiple of that of the female standard sub-cavity.

With reference to the first aspect, in some implementations of the first aspect, the male connector further includes a plurality of male standard functional modules. A volume of each of the plurality of male standard functional modules is an integer multiple of that of the male standard sub-cavity. The plurality of male standard functional modules correspond to the plurality of female standard functional modules. Module guiding corners are disposed around a side, connected to the female standard module, of each of the plurality of male standard functional modules. A spring clamping slot is disposed on a side surface of each male standard functional module. The side surface of each male standard functional module is a surface of each male standard functional module in the Z direction. The Z direction is perpendicular to the mating surface of the male connector.

With reference to the first aspect, in some implementations of the first aspect, the female connector includes a positioning pin, and the male connector includes a positioning hole. The positioning pin cooperates with the positioning hole to perform positioning for blind mating between the female connector and the male connector.

With reference to the first aspect, in some implementations of the first aspect, a flexible rubber sleeve is connected to a tail of the female connector. The flexible rubber sleeve is used for flexible wiring between the female connector and the vehicle door.

According to a second aspect, a standard functional module is provided. The standard functional module is mounted in a male connector of a vehicle door or a female connector of the vehicle door, and is configured to enable connectors with different types of signals to share one mating interface.

A volume of the standard functional module is N times that of a standard sub-cavity, where N is a positive integer greater than or equal to 1. The standard sub-cavity is a standard sub-cavity of the male connector of the vehicle door or the female connector of the vehicle door. Module guiding corners are disposed around an upper surface of the standard functional module. A spring clamping slot is disposed on a side surface of the standard functional module.

With reference to the second aspect, in some implementations of the second aspect, the volume of the standard functional module is N times that of the standard sub-cavity, and when N is greater than or equal to 2, N - 1 slots are disposed on the side surface of the standard functional module. The N - 1 slots are configured to clamp a fixed baffle plate of the male connector of the vehicle door or the female connector of the vehicle door.

According to a third aspect, a method for mounting a modular vehicle door connector on a vehicle is provided, including: selecting a modular vehicle door connector and standard functional modules of the modular vehicle door connector based on configurations of a vehicle, where the standard functional modules include a female standard functional module and a male standard functional module, the female standard functional module and the male standard functional module have corresponding functions, the female connector includes a plurality of female standard sub-cavities, space sizes of the plurality of female standard sub-cavities are the same, a fixed baffle plate is disposed between two adjacent female standard sub-cavities in the plurality of female standard sub-cavities, the plurality of female standard sub-cavities are configured to mount female standard functional modules, the male connector includes a plurality of male standard sub-cavities, space sizes of the plurality of male standard sub-cavities are the same as the space sizes of the plurality of female standard sub-cavities, a fixed baffle plate is disposed between two adjacent male standard sub-cavities in the plurality of male standard sub-cavities, and the plurality of male standard sub-cavities are configured to mount male standard functional modules; determining, based on the selected female standard functional module and male standard functional module, a harness for connecting the female standard functional module to the male standard functional module; and mounting the modular vehicle door connector, the standard functional modules of the modular vehicle door connector, and the harness on the vehicle.

With reference to the third aspect, in some implementations of the third aspect, when the functional modules of the modular vehicle door connector cannot fill a plurality of standard sub-cavities of the modular vehicle door connector, the functional modules of the modular vehicle door connector are continuously mounted in the standard sub-cavities of the modular vehicle door connector.

With reference to the third aspect, in some implementations of the third aspect, when the vehicle is upgraded, required functional modules are added to a cavity of the male connector and a cavity of the female connector according to an upgrade requirement of the vehicle.

According to a fourth aspect, a method for manufacturing a vehicle door connector is provided, including: manufacturing a female connector plastic part and a male connector plastic part, where the female connector plastic part includes a plurality of female standard sub-cavities, space sizes of the plurality of female standard sub-cavities are the same, a fixed baffle plate is disposed between two adjacent female standard sub-cavities in the plurality of female standard sub-cavities, the plurality of female standard sub-cavities are configured to mount female standard functional modules, the male connector plastic part includes a plurality of male standard sub-cavities, space sizes of the plurality of male standard sub-cavities are the same as the space sizes of the plurality of female standard sub-cavities, a fixed baffle plate is disposed between two adjacent male standard sub-cavities in the plurality of male standard sub-cavities, and the plurality of male standard sub-cavities are configured to mount male standard functional modules; and opening molds for the female connector plastic part and the male connector plastic part to manufacture a female connector and a male connector.

With reference to the fourth aspect, in some implementations of the fourth aspect, a first floating tolerance spring is disposed on a side wall of each of the plurality of female standard sub-cavities included in the female connector plastic part. The first floating tolerance spring is configured to limit an elastic floating tolerance of the female standard functional module in an X direction. The X direction is parallel to a mating surface of the female connector and parallel to the top and the bottom of the female connector. A second floating tolerance spring is disposed on the fixed baffle plate of the female connector plastic part. The second floating tolerance spring is configured to limit an elastic floating tolerance of the female standard functional module in a Y direction. The Y direction is parallel to the mating surface of the female connector and perpendicular to the top and the bottom of the female connector.

With reference to the fourth aspect, in some implementations of the fourth aspect, the female connector plastic part further includes a module limiting structure. The module limiting structure is located on a lower surface of the female connector. The module limiting structure is configured to limit a location of the female standard functional module in a Z direction.

The Z direction is perpendicular to the mating surface of the female connector.

With reference to the fourth aspect, in some implementations of the fourth aspect, a plurality of female standard functional module plastic parts are manufactured, where
a volume of each of the plurality of female standard functional module plastic parts is an integer multiple of that of the female standard sub-cavity;
module guiding corners are disposed around a side, connected to the male standard functional module, of each of the plurality of female standard functional module plastic parts; and
a spring clamping slot is disposed on a side surface of each female standard functional module plastic part, and the side surface of each female standard functional module plastic part is a surface of the female standard functional module in the Z direction, where
the Z direction is perpendicular to a mating surface of the female connector plastic part; and
molds are opened for the plurality of female standard functional module plastic parts to manufacture a plurality of female standard functional modules.

With reference to the fourth aspect, in some implementations of the fourth aspect, the method further includes: manufacturing a plurality of male standard functional module plastic parts, where
a volume of the male standard functional module plastic part is an integer multiple of that of the male standard sub-cavity, and the plurality of male standard functional module plastic parts and the plurality of female standard functional module plastic parts have corresponding functions; and
opening molds for the plurality of male standard functional module plastic parts to manufacture a plurality of male standard functional modules.

With reference to the fourth aspect, in some implementations of the fourth aspect, the method further includes: manufacturing a plurality of male standard functional module plastic parts, where
a volume of the male standard functional module plastic part is an integer multiple of that of the male standard sub-cavity; and
opening molds for the plurality of male standard functional module plastic parts to manufacture a plurality of male standard functional modules.

With reference to the fourth aspect, in some implementations of the fourth aspect, the method further includes: manufacturing a plurality of female standard functional module plastic parts, where
a volume of each of the plurality of female standard functional module plastic parts is an integer multiple of that of the female standard sub-cavity, and the plurality of female standard functional module plastic parts and the plurality of male standard functional module plastic parts have corresponding functions;
module guiding corners are disposed around a side, connected to the male standard functional module, of each of the plurality of female standard functional module plastic parts;
a spring clamping slot is disposed on a side surface of each female standard functional module plastic part, and the side surface of each female standard functional module plastic part is a surface of the female standard functional module in the Z direction, where
the Z direction is perpendicular to a mating surface of the female connector plastic part; and
opening molds for the plurality of female standard functional module plastic parts to manufacture a plurality of female standard functional modules.

With reference to the fourth aspect, in some implementations of the fourth aspect, a first floating tolerance spring is disposed on a side wall of each of the plurality of male standard sub-cavities included in the male connector plastic part. The first floating tolerance spring is configured to limit an elastic floating tolerance of the male standard functional module in an X direction. The X direction is parallel to a mating surface of the male connector and parallel to the top and the bottom of the male connector.

A second floating tolerance spring is disposed on the fixed baffle plate of the male connector. The second floating tolerance spring is configured to limit an elastic floating tolerance of the male standard functional module in the Y direction. The Y direction is parallel to the mating surface of the male connector and perpendicular to the top and the bottom of the male connector.

With reference to the fourth aspect, in some implementations of the fourth aspect, the male connector plastic part further includes a module limiting structure. The module limiting structure is located on a lower surface of the male connector. The module limiting structure is configured to limit a location of the male standard functional module in a Z direction. The Z direction is perpendicular to the mating surface of the male connector.

With reference to the fourth aspect, in some implementations of the fourth aspect, the method further includes: manufacturing a plurality of male standard functional module plastic parts, where a volume of each of the plurality of male standard functional module plastic parts is an integer multiple of that of the male standard sub-cavity, module guiding corners are disposed around a side, connected to the male standard functional module, of each of the plurality of male standard functional module plastic parts, a spring clamping slot is disposed on a side surface of each male standard functional module plastic part, the side surface of each male standard functional module plastic part is a surface of the male standard functional module in the Z direction, and the Z direction is perpendicular to a mating surface of the male connector plastic part; and opening molds for the plurality of male standard functional module plastic parts to manufacture a plurality of male standard functional modules.

With reference to the fourth aspect, in some implementations of the fourth aspect, the method further includes: manufacturing a plurality of female standard functional module plastic parts, where a volume of the female standard functional module plastic part is an integer multiple of that of the female standard sub-cavity, and the plurality of female standard functional module plastic parts and the plurality of male standard functional module plastic parts have corresponding functions; and opening molds for the plurality of female standard functional module plastic parts to manufacture a plurality of female standard functional modules.

With reference to the fourth aspect, in some implementations of the fourth aspect, the method further includes: manufacturing a plurality of female standard functional module plastic parts, where a volume of the female standard functional module plastic part is an integer multiple of that of the female standard sub-cavity; and opening molds for the plurality of female standard functional module plastic parts to manufacture a plurality of female standard functional modules.

With reference to the fourth aspect, in some implementations of the fourth aspect, the method further includes: manufacturing a plurality of male standard functional module plastic parts, where a volume of each of the plurality of male standard functional module plastic parts is an integer multiple of that of the male standard sub-cavity, the plurality of male standard functional module plastic parts and the plurality of male standard functional module plastic parts have corresponding functions, module guiding corners are disposed around a side, connected to the male standard functional module, of each of the plurality of male standard functional module plastic parts, a spring clamping slot is disposed on a side surface of each male standard functional module plastic part, the side surface of each male standard functional module plastic part is a surface of the male standard functional module in the Z direction, and the Z direction is perpendicular to a mating surface of the male connector plastic part; and opening molds for the plurality of male standard functional module plastic parts to manufacture a plurality of male standard functional modules.

### BRIEF DESCRIPTION OF DRAWINGS

FIG. 1 is a schematic structural diagram of a modular vehicle door connector according to an embodiment of this application;
FIG. 2 is a schematic flowchart of a method for mounting a modular vehicle door connector on a vehicle according to this application;
FIG. 3 is a schematic flowchart of a method for manufacturing a modular vehicle door connector according to this application; and
FIG. 4 is a schematic assembly diagram of a vehicle door connector on which a plurality of different standard functional modules are mounted.

### DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are some rather than all of the embodiments of this application. All other embodiments obtained by a person of ordinary skill in the art based on the embodiments of this application without creative efforts shall fall within the protection scope of this application.

The following describes technical solutions of this application with reference to accompanying drawings.

To better understand this application, the following first describes terms in this application.

A vehicle door connector is a door-side connector connecting a vehicle door harness to a vehicle body harness.

A positioning pin is a part feature that participates in limiting a degree of freedom of an object. In this application, the positioning pin implements coarse guiding during preliminary interconnection between a male connector and a female connector of a vehicle door connector.

A floating tolerance spring is an elastic structure that allows elastically introducing a structure by using a guiding structure under a specific deviation to perform matching.

A body in white is an unpainted vehicle body that is obtained through welding assembly of mechanical parts and covering parts of the vehicle body and that includes a front wing, a vehicle door, an engine hood, and a trunk lid, but excludes accessories and trim parts, for example, interior seats, a dashboard, and other accessories.

Vehicle door wiring means connecting a vehicle door harness to a vehicle body harness. Currently, there are two comparatively common forms of vehicle door wiring: a wiring mode using a rubber sleeve and a wiring mode using a vehicle door connector. In the wiring mode using a rubber sleeve, a rubber sleeve connecting a vehicle door structure to the body in white is designed, two sides of the rubber sleeve are separately matched and sealed with the body in white and the vehicle door structure, and a vehicle door harness passes through the rubber sleeve and connects to a vehicle body harness in a cabin. In the wiring mode using a vehicle door connector, an electrical signal connection is performed near a vehicle door through interconnection by using a connector. The vehicle door connector is configured to connect a vehicle door harness to an entire-vehicle harness to ensure normal operating of an electrical component on the vehicle door. Generally, the vehicle door connector includes a male connector fixed on the body in white and a female connector carried by the vehicle door harness. After the male and female connectors are matched and mounted by using a clamping and locking structure, an electrical connection is implemented, and sealing is also implemented to prevent liquid from penetrating into a gap between the connectors.

The wiring mode using a rubber sleeve is a comparatively common wiring structure for a door wire because of its low price and diversified structures. When a vehicle model is upgraded, a new functional wire may be added to the rubber sleeve to implement a functional upgrade and extension. However, in the wiring mode using a rubber sleeve, an interconnection point of the vehicle door harness and the vehicle body harness is in the cabin. Removal and maintenance of the vehicle door are comparatively complex, and interior trim parts need to be removed to disconnect a harness connection. Generally, the rubber sleeve includes a hard buckle or a rubber clamping slot for fitting and clamping the body in white. The hard buckle or the rubber clamping slot has a limited removal life and is easy to damage.

In the wiring mode using a vehicle door connector, a vehicle door can serve as an independent removable module. The wiring mode using a vehicle door connector is comparatively convenient and is widely used for high-end vehicles. In a maintenance scenario, this form allows the entire vehicle door to be removed quickly, and the connector can be mounted and removed comparatively easily. However, an interface and an internal structure of the vehicle door connector are fixed. Therefore, a functional upgrade or a functional extension cannot be implemented, and an extension of a high-speed signal cannot be implemented.

Both the wiring mode using a rubber sleeve and the wiring mode using a connector have simple forms and limited wiring functions, and therefore cannot implement functional upgrades or functional extensions. When a vehicle model is modified and a function of a vehicle door is upgraded, new versions need to be made for both the existing vehicle door wiring modes, thereby increasing upgrade costs.

In view of this, this application provides a modular vehicle door connector. The modular vehicle door connector includes a female connector and a male connector. The female connector includes a plurality of female standard sub-cavities. Space sizes of the plurality of female standard sub-cavities are the same. A fixed baffle plate is disposed between two adjacent female standard sub-cavities in the plurality of female standard sub-cavities. The plurality of female standard sub-cavities are configured to mount female standard functional modules. The male connector includes a plurality of male standard sub-cavities. Space sizes of the plurality of male standard sub-cavities are the same as the space sizes of the plurality of female standard sub-cavities. A fixed baffle plate is disposed between two adjacent male standard sub-cavities in the plurality of male standard sub-cavities. The plurality of male standard sub-cavities are configured to mount male standard functional modules. Therefore, movable standard modules with different functions may be inserted in the modular vehicle door connector. When a vehicle is upgraded and updated, a corresponding functional module may be inserted in the modular vehicle door connector, thereby reducing upgrade costs of the vehicle. In addition, the modular vehicle door connector is easier to maintain and remove compared with the wiring mode using a rubber sleeve.

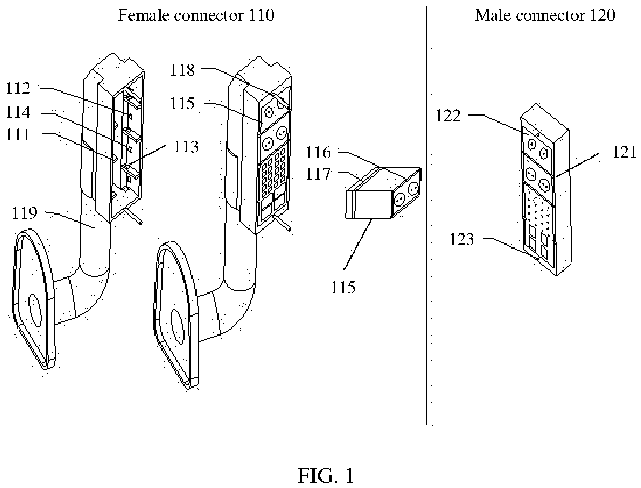

The following describes in detail a modular vehicle door connector provided in this application with reference to FIG. 1. FIG. 1 is a schematic structural diagram of a modular vehicle door connector 100 according to an embodiment of this application;
The modular vehicle door connector 100 includes a female connector 110 and a male connector 120. The female connector 110 includes a plurality of female standard sub-cavities. Space sizes of the plurality of female standard sub-cavities are the same. A fixed baffle plate 111 is disposed between two adjacent female standard sub-cavities of the female connector 110. The plurality of female standard sub-cavities are configured to mount female standard functional modules. The male connector 120 includes a plurality of male standard sub-cavities. Space sizes of the plurality of male standard sub-cavities are the same as the space sizes of the plurality of female standard sub-cavities. A fixed baffle plate 121 is disposed between two adjacent male standard sub-cavities of the male connector 120. The plurality of male standard sub-cavities are configured to mount male standard functional modules.

The plurality of female standard sub-cavities of the female connector 110 and the plurality of male standard sub-cavities of the male connector 120 are configured to mount a female standard functional module and a male standard functional module according to a requirement of a vehicle. The female standard functional module mounted on the female connector corresponds to the male standard functional module mounted on the male connector. The female connector 110 is integrated into a vehicle door harness. The male connector 120 is integrated into a vehicle body harness and clamped into an opening in a body in white. The female connector 110 and the male connector 120 are fixedly connected.

It should be understood that, in the modular vehicle door connector 100 provided in this application, the space sizes of the plurality of female standard sub-cavities and the plurality of male standard sub-cavities are the same, to implement universal matching. Alternatively, the space sizes of the plurality of female standard sub-cavities of the modular vehicle door connector may be different, and the space sizes of the plurality of male standard sub-cavities may be different, provided that volumes of a female standard sub-cavity and a male standard sub-cavity in corresponding locations are the same. For example, the female connector includes four female standard sub-cavities, and volumes of the four female standard sub-cavities are V₁, V₂, V₂, and V₄, where V₁, V₂, and V₄ are different. Correspondingly, the male connector includes four male standard sub-cavities, and volumes of the four male standard sub-cavities are V₁, V₂, V₂, and V₄.

A first floating tolerance spring 112 is disposed on a side wall of each of the plurality of female standard sub-cavities included in the female connector 110. The first floating tolerance spring 112 is configured to limit an elastic floating tolerance of the female standard functional module in an X direction. The X direction is parallel to a mating surface of the female connector 110 and parallel to the top and the bottom of the female connector 110.

A second floating tolerance spring 113 is disposed on each fixed baffle plate 111 included in the female connector 110. The second floating tolerance spring 113 is configured to limit an elastic floating tolerance of the female standard functional module in a Y direction. The Y direction is parallel to the mating surface of the female connector 110 and perpendicular to the top and the bottom of the female connector 110.

The first floating tolerance spring 112 may allow the female standard functional module to be inserted in the female standard sub-cavity within an elastic floating tolerance range of the female standard functional module in the X direction. The first floating tolerance spring 112 also provides a module locking function, to ensure that the female standard functional module does not move in the X direction after the female standard functional module is inserted in the female standard sub-cavity. The second floating tolerance spring 113 is configured to limit the elastic floating tolerance of the female standard functional module in the Y direction. The second floating tolerance spring 113 may allow the female standard functional module to be inserted in the female standard sub-cavity within an elastic floating tolerance range of the female standard functional module in the Y direction. The second floating tolerance spring 113 also provides a module locking function, to ensure that the female standard functional module does not move in the Y direction after the female standard functional module is inserted in the female standard sub-cavity.

The first floating tolerance spring 112 disposed on the side wall of each of the plurality of female standard sub-cavities and the second floating tolerance springs 113 disposed on the plurality of fixed baffle plates 111 are configured to limit elastic floating tolerances of female standard functional modules in the X direction and the Y direction, so that blind mating of all modules can be implemented at a time after coarse guiding is performed for the female standard functional modules of the female connector and the male standard functional modules of the male connector, without separately connecting or inserting a single female standard module and a single male standard functional module.

It should be understood that the second floating tolerance spring 113 may alternatively not be disposed on each fixed baffle plate 111 included in the female connector 110. When the first floating tolerance spring 112 is disposed on the side wall of each of the plurality of standard sub-cavities, the second floating tolerance spring 112 is configured to limit the elastic floating tolerance of the female standard functional module in the X direction, and a size of the female standard functional module may be properly reduced in the Y direction of the female standard functional module, so that the female standard functional module can be directly inserted in the female standard sub-cavity in the Y direction. When the first floating tolerance spring 112 is sufficient to clamp the female standard functional module so that the female standard functional module does not move in the X direction, the female standard functional module can also be prevented from moving in the Y direction.

It should be further understood that the first floating tolerance spring 112 may not be disposed on the side wall of each of the plurality of female standard sub-cavities included in the female connector 110. When the second floating tolerance spring 113 is disposed on each fixed baffle plate 111 included in the female connector 110, the second floating tolerance spring 113 is configured to limit the elastic floating tolerance of the female standard functional module in the Y direction, and a size of the female standard functional module may be properly reduced in the X direction of the female standard functional module, so that the female standard functional module can be directly inserted in the female standard sub-cavity in the X direction. When the first floating tolerance spring 113 is sufficient to clamp the female standard functional module so that the female standard functional module does not move in the Y direction, the female standard functional module can also be prevented from moving in the X direction.

The female connector 110 further includes a module limiting structure 114. The module limiting structure 114 is located on a lower surface of the female connector. The module limiting structure 114 is configured to limit a location of the female standard functional module in a Z direction.

The Z direction is perpendicular to the mating surface of the female connector 110.

The module limiting structure 114 is configured to prevent the female standard functional module from moving in the Z direction after the female standard functional module is inserted in the female standard sub-cavity, thereby ensuring that the female standard functional module does not fall off after being mounted in the female standard sub-cavity.

It should be understood that the module limiting structures 114 may be located on two sides of the lower surface of the female connector 110, as shown in FIG. 1, or may be located on an entire plane of the lower surface of the female connector 110. Alternatively, the module limiting structures 114 may be located at intervals on the lower surface of the female connector 110. For example, the module limiting structures 114 may be located on two sides and in the middle of the lower surface of the female connector 110.

The female connector 110 further includes a plurality of female standard functional modules 115. A volume of each of the plurality of female standard functional modules 115 is an integer multiple of that of the female standard sub-cavity. Module guiding corners 116 are disposed around a side, connected to the male standard functional module, of each female standard functional module 115. A spring clamping slot 117 is disposed on a side surface of each female standard functional module. The side surface of each female standard functional module 115 is a surface of the female standard functional module in the Z direction. The Z direction is perpendicular to the mating surface of the female connector.

The spring clamping slot 117 is configured to clamp the first floating tolerance spring 112 disposed on the side wall of each standard sub-cavity of the female connector 110 and the second floating tolerance spring 113 disposed on the fixed baffle plate 111 of the female connector 110, to implement coarse limiting for the female standard functional module. When a relative location of the female standard functional module falls within a range of the module guiding corners, the first floating tolerance spring 112 and the second floating tolerance spring 113 cooperate with the guiding corners 116 for guiding, to ensure normal matching.

It should be understood that a guiding angle of the module guiding corners 116 is usually set to 45°, or may be set to different angles based on an actual situation. This is not limited in this application.

A size of the female standard functional module is standardized based on an integer multiple of a size of a smallest female standard sub-cavity, to implement universal matching.

It should be understood that the female standard functional module may be a signal module, a high-current module, a high-speed coaxial module, a high-speed Ethernet module, or the like. The female standard functional module may occupy one or more female standard sub-cavities based on an actual size of a mating interface.

In a possible implementation, the volume of the female standard functional module is N times that of the female standard sub-cavity, and when N is greater than or equal to 2, N - 1 slots are disposed on the side surface of the female standard functional module. The N - 1 slots are configured to clamp the fixed baffle plate of the female connector.

The male connector further includes a plurality of male standard functional modules 122. A volume of each of the plurality of male standard functional modules 122 is an integer multiple of that of the male standard sub-cavity. The plurality of male standard functional modules 122 and the plurality of female standard functional modules 115 have corresponding functions, that is, the plurality of male standard functional modules 122 and the plurality of female standard functional modules 115 have a same function. For example, the female connector includes two female standard functional modules: a signal module and an Ethernet module. In this case, the male connector also includes two male standard functional modules: a signal module and an Ethernet module.

A volume setting of the male standard functional module 122 should be the same as a volume of a female standard functional module that has a same function as that of the male standard functional module 122. For specific descriptions of the male standard functional module 122, refer to the corresponding female standard functional module. No guiding corner or spring clamping slot needs to be disposed on the male standard functional module.

It should be understood that, in this application, various female standard functional modules and male standard functional modules can be flexibly mounted and removed. On a premise that all female standard functional modules and male standard functional modules are removed, a housing of the modular vehicle door connector may cooperate with a rubber sleeve coming with the modular vehicle door connector to serve as a common wiring rubber sleeve to provide a path for a harness in a scenario in which only a common rubber sleeve is required for wiring, thereby achieving high flexibility.

The female connector 110 includes a positioning pin 118, and the male connector 120 includes a positioning hole 123. The positioning pin 118 cooperates with the positioning hole 123 to perform positioning for blind mating between the female connector and the male connector.

The positioning pin 118 and the positioning hole 123 implement preliminary coarse guiding during blind mating between the male connector and the female connector. With the coarse guiding, location errors of the male connector and the female connector can be directed into a guiding range allowed by the guiding corners, thereby facilitating further fine guiding.

Because coarse and fine positioning floating structures are designed for the female connector 110, no complex floating structure needs to be designed for the male connector, and a male standard functional module may be fixedly mounted. During mounting of the male standard functional module, blind mating can be implemented through cooperation with a female elastic tolerance. Modules with same configurations are selected for the male connector and the female connector for flexible functional configuration.

A flexible rubber sleeve 119 is connected to a tail of the female connector. The flexible rubber sleeve 119 is used for flexible wiring between the female connector and a vehicle door.

Therefore, the plurality of female standard sub-cavities and the plurality of male standard sub-cavities are disposed on the female connector and the male connector of the modular vehicle door connector respectively, and the plurality of female standard sub-cavities and the plurality of male standard sub-cavities are configured to mount different female standard functional modules and male standard functional modules according to a requirement of the vehicle, so that when the vehicle is upgraded and updated, corresponding standard functional modules can be mounted according to an upgrade requirement of the vehicle, thereby avoiding upgrade costs caused by replacement of an existing vehicle door connector that cannot meet a new requirement of the vehicle. In addition, the modular vehicle door connector is more convenient than the wiring mode using a rubber sleeve, the connector is comparatively easy to mount and remove, and the vehicle door is easy to remove and maintain. The vehicle door can be removed without removing interior trim. Functional requirements for a power supply, a signal, a high speed, and the like can be flexibly configured for vehicle models with different configurations, and harness functions can be added or deleted. The vehicle door connector is normalized based on a platform.

Because coarse and fine positioning floating structures are designed for the female connector 110, no complex floating structure needs to be designed for the male connector 120, and a male standard functional module may be fixedly mounted. During mounting of the male standard functional module, blind mating can be implemented through cooperation with a female elastic tolerance. Modules with same configurations are selected for the male connector and the female connector for flexible functional configuration.

This application further provides a modular vehicle door connector. Coarse and fine positioning floating structures are designed for a male connector of the modular vehicle door connector. No complex floating structure needs to be designed for a female connector, and a female standard functional module may be fixedly mounted.

A modular vehicle door connector is used in the field of vehicles. The modular vehicle door connector is configured to connect a vehicle door harness to a vehicle body harness, and includes a female connector and a male connector. The female connector includes a plurality of female standard sub-cavities. Space sizes of the plurality of female standard sub-cavities are the same. A fixed baffle plate is disposed between two adjacent female standard sub-cavities in the plurality of female standard sub-cavities. The plurality of female standard sub-cavities are configured to mount female standard functional modules. The male connector includes a plurality of male standard sub-cavities. Space sizes of the plurality of male standard sub-cavities are the same as the space sizes of the plurality of female standard sub-cavities. A fixed baffle plate is disposed between two adjacent male standard sub-cavities in the plurality of male standard sub-cavities. The plurality of male standard sub-cavities are configured to mount male standard functional modules.

Optionally, a first floating tolerance spring is disposed on a side wall of each of the plurality of male standard sub-cavities included in the male connector. The first floating tolerance spring is configured to limit an elastic floating tolerance of the male standard functional module in an X direction. The X direction is parallel to a mating surface of the male connector and parallel to the top and the bottom of the male connector.

A second floating tolerance spring is disposed on the fixed baffle plate of the male connector. The second floating tolerance spring is configured to limit an elastic floating tolerance of the male standard functional module in a Y direction. The Y direction is parallel to the mating surface of the male connector and perpendicular to the top and the bottom of the male connector.

Optionally, the male connector further includes a module limiting structure. The module limiting structure is located on a lower surface of the male connector. The module limiting structure is configured to limit a location of the male standard functional module in a Z direction. The Z direction is perpendicular to the mating surface of the male connector.

Optionally, the male connector further includes a plurality of male standard functional modules. A volume of each of the plurality of male standard functional modules is an integer multiple of that of the male standard sub-cavity. Module guiding corners are disposed around a side, connected to the female standard module, of each of the plurality of male standard functional modules. A spring clamping slot is disposed on a side surface of each male standard functional module. The side surface of each male standard functional module is a surface of each male standard functional module in the Z direction. The Z direction is perpendicular to the mating surface of the male connector.

Optionally, the female connector further includes a plurality of female standard functional modules. A volume of each of the plurality of female standard functional modules is an integer multiple of that of the female standard sub-cavity. The plurality of female standard functional modules correspond to the plurality of male standard functional modules.

This application further provides a standard functional module. The standard functional module is mounted in a male connector of a vehicle door or a female connector of the vehicle door, and is configured to enable connectors with different types of signals to share one mating interface. A volume of the standard functional module is N times that of a standard sub-cavity, where N is a positive integer greater than or equal to 1. The standard sub-cavity is a standard sub-cavity of the male connector of the vehicle door or the female connector of the vehicle door. Module guiding corners are disposed around an upper surface of the standard functional module. A spring clamping slot is disposed on a side surface of the standard functional module.

Optionally, the volume of the standard functional module is N times that of the standard sub-cavity, and when N is greater than or equal to 2, N - 1 slots are disposed on the side surface of the standard functional module. The N - 1 slots are configured to clamp the fixed baffle plate of the male connector of the vehicle door or the female connector of the vehicle door.

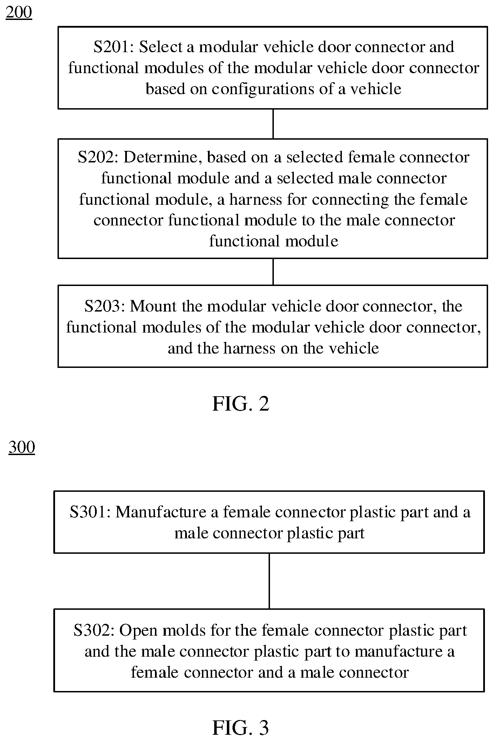

This application further provides a method 200 for mounting a modular vehicle door connector on a vehicle. As shown in FIG. 2, the method 200 shown in FIG. 2 may include S201 to S203. The steps in the method 200 are described in detail below with reference to FIG. 2.

S201: Select a modular vehicle door connector and standard functional modules of the modular vehicle door connector based on configurations of a vehicle.

The standard functional modules include a female standard functional module and a male standard functional module. The female standard functional module and the male standard functional module have corresponding functions. The female connector includes a plurality of female standard sub-cavities. Space sizes of the plurality of female standard sub-cavities are the same. A fixed baffle plate is disposed between two adjacent female standard sub-cavities in the plurality of female standard sub-cavities. The plurality of female standard sub-cavities are configured to mount female standard functional modules.

The male connector includes a plurality of male standard sub-cavities. Space sizes of the plurality of male standard sub-cavities are the same as the space sizes of the plurality of female standard sub-cavities. A fixed baffle plate is disposed between two adjacent male standard sub-cavities in the plurality of male standard sub-cavities. The plurality of male standard sub-cavities are configured to mount male standard functional modules.

S202: Determine, based on the selected female standard functional module and male standard functional module, a harness for connecting the female standard functional module to the male standard functional module.

S203: Mount the modular vehicle door connector, the standard functional modules of the modular vehicle door connector, and the harness on the vehicle.

Optionally, when functional modules of the modular vehicle door connector cannot fill a plurality of standard sub-cavities of the modular vehicle door connector, the functional modules of the modular vehicle door connector are continuously mounted in standard sub-cavities of the modular vehicle door connector.

Specifically, if not all module mounting sub-cavities are used, all sub-cavities are centrally vacated as far as possible, to avoid a case in which a single sub-cavity is sandwiched between two functional modules, so that cavities can be flexibly configured with maximum efficiency during a subsequent functional extension.

Optionally, when the vehicle is upgraded, required functional modules are added to a cavity of the male connector and a cavity of the female connector according to an upgrade requirement of the vehicle.

Specifically, in a functional extension scenario, a harness may be added to a remaining cavity of the modular vehicle door connector, or required matching functional modules may be added to male and female cavities, to implement a functional extension.

It should be further understood that, in a vehicle maintenance scenario, the connector may be directly removed, so that a vehicle door may be removed for maintenance, without disconnecting an internal connector under interior trim parts in a vehicle body.

This application provides a method 300 for manufacturing a vehicle door connector. As shown in FIG. 3, the method 300 shown in FIG. 3 may include S301 and S302. The steps in the method 300 are described in detail below with reference to FIG. 3.

S301: Manufacture a female connector plastic part and a male connector plastic part.

The female connector plastic part includes a plurality of female standard sub-cavities. Space sizes of the plurality of female standard sub-cavities are the same. A fixed baffle plate is disposed between two adjacent female standard sub-cavities in the plurality of female standard sub-cavities. The plurality of female standard sub-cavities are configured to mount female standard functional modules. The male connector plastic part includes a plurality of male standard sub-cavities. Space sizes of the plurality of male standard sub-cavities are the same as the space sizes of the plurality of female standard sub-cavities. A fixed baffle plate is disposed between two adjacent male standard sub-cavities in the plurality of male standard sub-cavities. The plurality of male standard sub-cavities are configured to mount male standard functional modules.

S302: Open molds for the female connector plastic part and the male connector plastic part to manufacture a female connector and a male connector.

Optionally, a first floating tolerance spring is disposed on a side wall of each of the plurality of female standard sub-cavities included in the female connector plastic part. The first floating tolerance spring is configured to limit an elastic floating tolerance of the female standard functional module in an X direction. The X direction is parallel to a mating surface of the female connector and parallel to the top and the bottom of the female connector. A second floating tolerance spring is disposed on the fixed baffle plate of the female connector plastic part. The second floating tolerance spring is configured to limit an elastic floating tolerance of the female standard functional module in a Y direction. The Y direction is parallel to the mating surface of the female connector and perpendicular to the top and the bottom of the female connector.

Optionally, the female connector plastic part further includes a module limiting structure. The module limiting structure is located on a lower surface of the female connector. The module limiting structure is configured to limit a location of the female standard functional module in a Z direction.

The Z direction is perpendicular to the mating surface of the female connector.

Optionally, the method 300 further includes: manufacturing a plurality of female standard functional module plastic parts, where a volume of each of the plurality of female standard functional module plastic parts is an integer multiple of that of the female standard sub-cavity, module guiding corners are disposed around a side, connected to the male standard functional module, of each of the plurality of female standard functional module plastic parts, a spring clamping slot is disposed on a side surface of each female standard functional module plastic part, the side surface of each female standard functional module plastic part is a surface of the female standard functional module in the Z direction, and the Z direction is perpendicular to a mating surface of the female connector plastic part; and opening molds for the plurality of female standard functional module plastic parts to manufacture a plurality of female standard functional modules.

Optionally, the method 300 further includes: manufacturing a plurality of male standard functional module plastic parts, where a volume of the male standard functional module plastic part is an integer multiple of that of the male standard sub-cavity, and the plurality of male standard functional module plastic parts and the plurality of female standard functional module plastic parts have corresponding functions; and opening molds for the plurality of male standard functional module plastic parts to manufacture a plurality of male standard functional modules.

Optionally, a first floating tolerance spring is disposed on a side wall of each of the plurality of male standard sub-cavities included in the male connector plastic part. The first floating tolerance spring is configured to limit an elastic floating tolerance of the male standard functional module in the X direction. The X direction is parallel to a mating surface of the male connector and parallel to the top and the bottom of the male connector. A second floating tolerance spring is disposed on the fixed baffle plate of the male connector. The second floating tolerance spring is configured to limit an elastic floating tolerance of the male standard functional module in the Y direction. The Y direction is parallel to the mating surface of the male connector and perpendicular to the top and the bottom of the male connector.

Optionally, the male connector plastic part further includes a module limiting structure. The module limiting structure is located on a lower surface of the male connector. The module limiting structure is configured to limit a location of the male standard functional module in a Z direction.

The Z direction is perpendicular to the mating surface of the male connector.

Optionally, the method 300 further includes: manufacturing a plurality of male standard functional module plastic parts, where a volume of each of the plurality of male standard functional module plastic parts is an integer multiple of that of the male standard sub-cavity, module guiding corners are disposed around a side, connected to the male standard functional module, of each of the plurality of male standard functional module plastic parts, a spring clamping slot is disposed on a side surface of each male standard functional module plastic part, the side surface of each male standard functional module plastic part is a surface of the male standard functional module in the Z direction, and the Z direction is perpendicular to a mating surface of the male connector plastic part; and opening molds for the plurality of male standard functional module plastic parts to manufacture a plurality of male standard functional modules.

Optionally, the method 300 further includes: manufacturing a plurality of female standard functional module plastic parts, where a volume of the female standard functional module plastic part is an integer multiple of that of the female standard sub-cavity, and the plurality of female standard functional module plastic parts and the plurality of male standard functional module plastic parts have corresponding functions; and opening molds for the plurality of female standard functional module plastic parts to manufacture a plurality of female standard functional modules.

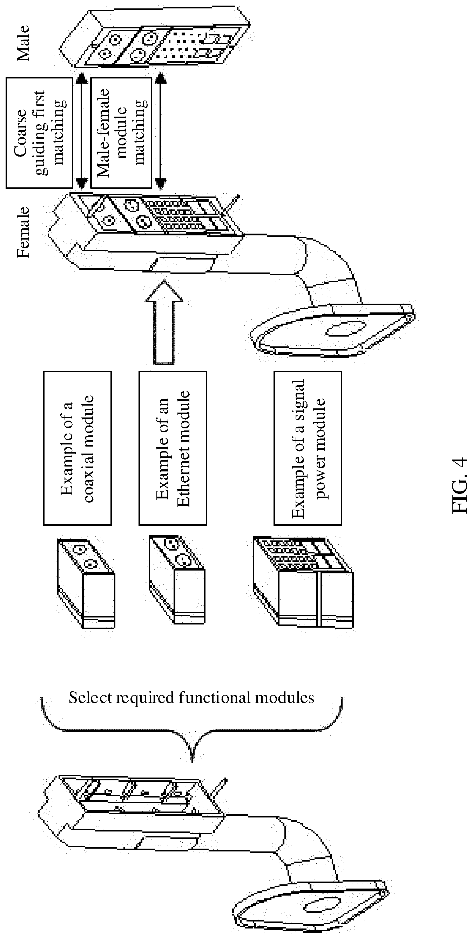

To understand this application more clearly, the following briefly describes a modular vehicle door connector on which a plurality of different standard functional modules are mounted as an example. FIG. 4 is a schematic assembly diagram of a vehicle door connector on which a plurality of different standard functional modules are mounted. First, a required standard functional module is selected based on configurations of a vehicle model. It is assumed that standard functional modules that need to be configured for the vehicle model include a group of three modules: a single-layer coaxial signal module, a single-layer Ethernet signal module, and a double-layer hybrid signal and power supply module. The single-layer coaxial signal module occupies one sub-cavity, the single-layer Ethernet signal module occupies one sub-cavity, and the double-layer hybrid signal and power supply module occupies two sub-cavities. First, a required female standard functional module is inserted in a cavity of a female connector housing. Then a required male standard functional module is correspondingly inserted in a cavity of a male connector housing. Then fitting is performed between a male connector and a female connector. During the fitting, first, a guiding pin gets in contact with a guiding hole to ensure coarse guiding, and then guiding corners on the independent female and male standard functional modules are used for fine guiding to finally ensure that the entire modules are fit in place. The female connector is assembled and wired as shown in FIG. 4. The male standard functional module of the male connector is synchronously configured and wired with reference to a configured function and a configuration sequence of the female connector to finally obtain, through matching, a male and female connector combination that meets a requirement.

It should be understood that in this application, "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. Similar to "A and/or B", "at least one of A and B" describes an association relationship for describing associated objects and represents that three relationships may exist. For example, at least one of A and B may represent the following three cases: Only A exists, both A and B exist, and only B exists.

In this application, names may be assigned to various objects such as apparatuses, actions, operations, procedures, and concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied or performed by the technical terms in the technical solutions.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A modular vehicle door connector, wherein the modular vehicle door connector is configured to connect a vehicle door harness and a vehicle body harness, and comprises:
a female connector and a male connector;
the female connector comprises a plurality of female standard sub-cavities, space sizes of the plurality of female standard sub-cavities are the same, a fixed baffle plate is disposed between two adjacent female standard sub-cavities in the plurality of female standard sub-cavities, and the plurality of female standard sub-cavities are configured to mount female standard functional modules; and
the male connector comprises a plurality of male standard sub-cavities, space sizes of the plurality of male standard sub-cavities are the same as the space sizes of the plurality of female standard sub-cavities, a fixed baffle plate is disposed between two adjacent male standard sub-cavities in the plurality of male standard sub-cavities, and the plurality of male standard sub-cavities are configured to mount male standard functional modules.

2. The modular vehicle door connector according to claim 1, wherein a first floating tolerance spring is disposed on a side wall of each of the plurality of female standard sub-cavities comprised in the female connector, the first floating tolerance spring is configured to limit an elastic floating tolerance of the female standard functional module in an X direction, and the X direction is parallel to a mating surface of the female connector and parallel to the top and the bottom of the female connector; and
a second floating tolerance spring is disposed on the fixed baffle plate of the female connector, the second floating tolerance spring is configured to limit an elastic floating tolerance of the female standard functional module in a Y direction, and the Y direction is parallel to the mating surface of the female connector and perpendicular to the top and the bottom of the female connector.

3. The modular vehicle door connector according to claim 1 or 2, wherein the female connector further comprises a module limiting structure, the module limiting structure is located on a lower surface of the female connector, and the module limiting structure is configured to limit a location of the female standard functional module in a Z direction, wherein
the Z direction is perpendicular to the mating surface of the female connector.

4. The modular vehicle door connector according to any one of claims 1 to 3, wherein the female connector further comprises a plurality of female standard functional modules, and a volume of each of the plurality of female standard functional modules is an integer multiple of that of the female standard sub-cavity;
module guiding corners are disposed around a side, connected to the male standard functional module, of each of the plurality of female standard functional modules; and
a spring clamping slot is disposed on a side surface of each female standard functional module, and the side surface of each female standard functional module is a surface of the female standard functional module in the Z direction, wherein
the Z direction is perpendicular to the mating surface of the female connector.

5. The modular vehicle door connector according to claim 4, wherein the male connector further comprises a plurality of male standard functional modules, a volume of each of the plurality of male standard functional modules is an integer multiple of that of the male standard sub-cavity, and the plurality of male standard functional modules and the plurality of female standard functional modules have corresponding functions.

6. The modular vehicle door connector according to any one of claims 1 to 3, wherein the male connector further comprises a plurality of male standard functional modules, and a volume of each of the plurality of male standard functional modules is an integer multiple of that of a standard sub-cavity.

7. The modular vehicle door connector according to claim 6, wherein the female connector further comprises a plurality of female standard functional modules, a volume of each of the plurality of female standard functional modules is an integer multiple of that of the female standard sub-cavity, and the plurality of female standard functional modules and the plurality of male standard functional modules have corresponding functions;
module guiding corners are disposed around a side, connected to the male standard functional module, of each of the plurality of female standard functional modules; and
a spring clamping slot is disposed on a side surface of each female standard functional module, and the side surface of the female standard functional module is a surface of the female standard functional module in the Z direction, wherein
the Z direction is perpendicular to the mating surface of the female connector.

8. The modular vehicle door connector according to claim 1, wherein a first floating tolerance spring is disposed on a side wall of each of the plurality of male standard sub-cavities comprised in the male connector, the first floating tolerance spring is configured to limit an elastic floating tolerance of the male standard functional module in an X direction, and the X direction is parallel to a mating surface of the male connector and parallel to the top and the bottom of the male connector; and
a second floating tolerance spring is disposed on the fixed baffle plate of the male connector, the second floating tolerance spring is configured to limit an elastic floating tolerance of the male standard functional module in a Y direction, and the Y direction is parallel to the mating surface of the male connector and perpendicular to the top and the bottom of the male connector.

9. The modular vehicle door connector according to claim 8, wherein the male connector further comprises a module limiting structure, the module limiting structure is located on a lower surface of the male connector, and the module limiting structure is configured to limit a location of the male standard functional module in a Z direction, wherein
the Z direction is perpendicular to the mating surface of the male connector.

10. The modular vehicle door connector according to claim 8 or 9, wherein the male connector further comprises a plurality of male standard functional modules, and a volume of each of the plurality of male standard functional modules is an integer multiple of that of the male standard sub-cavity;
module guiding corners are disposed around a side, connected to the female standard module, of each of the plurality of male standard functional modules; and
a spring clamping slot is disposed on a side surface of each male standard functional module, and the side surface of each male standard functional module is a surface of each male standard functional module in the Z direction, wherein
the Z direction is perpendicular to the mating surface of the male connector.

11. The modular vehicle door connector according to any one of claims 8 to 10, wherein the female connector further comprises a plurality of female standard functional modules, a volume of each of the plurality of female standard functional modules is an integer multiple of that of the female standard sub-cavity, and the plurality of female standard functional modules correspond to the plurality of male standard functional modules.

12. The modular vehicle door connector according to claim 11, wherein the female connector further comprises a plurality of female standard functional modules, and a volume of each of the plurality of female standard functional modules is an integer multiple of that of the female standard sub-cavity.

13. The modular vehicle door connector according to claim 12, wherein the male connector further comprises a plurality of male standard functional modules, a volume of each of the plurality of male standard functional modules is an integer multiple of that of the male standard sub-cavity, and the plurality of male standard functional modules correspond to the plurality of female standard functional modules;
module guiding corners are disposed around a side, connected to the female standard module, of each of the plurality of male standard functional modules; and
a spring clamping slot is disposed on a side surface of each male standard functional module, and the side surface of each male standard functional module is a surface of each male standard functional module in the Z direction, wherein
the Z direction is perpendicular to the mating surface of the male connector.

14. A standard functional module, wherein the standard functional module is mounted in a male connector of a vehicle door or a female connector of the vehicle door, and is configured to enable connectors with different types of signals to share one mating interface, wherein
a volume of the standard functional module is N times that of a standard sub-cavity, wherein N is a positive integer greater than or equal to 1, and the standard sub-cavity is a standard sub-cavity of the male connector of the vehicle door or the female connector of the vehicle door;
module guiding corners are disposed around an upper surface of the standard functional module; and
a spring clamping slot is disposed on a side surface of the standard functional module.

15. The standard functional module according to claim 14, wherein
the volume of the standard functional module is N times that of the standard sub-cavity, and when N is greater than or equal to 2, N - 1 slots are disposed on the side surface of the standard functional module, and the N - 1 slots are configured to clamp a fixed baffle plate of the male connector of the vehicle door or the female connector of the vehicle door.

16. A method for mounting a modular vehicle door connector on a vehicle, comprising:
selecting a modular vehicle door connector and standard functional modules of the modular vehicle door connector based on configurations of a vehicle, wherein
the standard functional modules comprise a female standard functional module and a male standard functional module, the female standard functional module and the male standard functional module have corresponding functions, the female connector comprises a plurality of female standard sub-cavities, space sizes of the plurality of female standard sub-cavities are the same, a fixed baffle plate is disposed between two adjacent female standard sub-cavities in the plurality of female standard sub-cavities, and the plurality of female standard sub-cavities are configured to mount female standard functional modules; and
the male connector comprises a plurality of male standard sub-cavities, space sizes of the plurality of male standard sub-cavities are the same as the space sizes of the plurality of female standard sub-cavities, a fixed baffle plate is disposed between two adjacent male standard sub-cavities in the plurality of male standard sub-cavities, and the plurality of male standard sub-cavities are configured to mount male standard functional modules;
determining, based on the selected female standard functional module and male standard functional module, a harness for connecting the female standard functional module to the male standard functional module; and
mounting the modular vehicle door connector, the standard functional modules of the modular vehicle door connector, and the harness on the vehicle.

17. The method according to claim 16, wherein the method further comprises:
when the standard functional modules of the modular vehicle door connector cannot fill a plurality of standard sub-cavities of the modular vehicle door connector, continuously mounting the standard functional modules of the modular vehicle door connector in the standard sub-cavities of the modular vehicle door connector.

18. The method according to claim 16 or 17, wherein the method further comprises:
when the vehicle is upgraded, adding required standard functional modules to a standard sub-cavity of the male connector and a standard sub-cavity of the female connector according to an upgrade requirement of the vehicle.

19. A method for manufacturing a vehicle door connector, comprising:
manufacturing a female connector plastic part and a male connector plastic part, wherein
the female connector plastic part comprises a plurality of female standard sub-cavities, space sizes of the plurality of female standard sub-cavities are the same, a fixed baffle plate is disposed between two adjacent female standard sub-cavities in the plurality of female standard sub-cavities, the plurality of female standard sub-cavities are configured to mount female standard functional modules, the male connector plastic part comprises a plurality of male standard sub-cavities, space sizes of the plurality of male standard sub-cavities are the same as the space sizes of the plurality of female standard sub-cavities, a fixed baffle plate is disposed between two adjacent male standard sub-cavities in the plurality of male standard sub-cavities, and the plurality of male standard sub-cavities are configured to mount male standard functional modules; and
opening molds for the female connector plastic part and the male connector plastic part, to manufacture a female connector and a male connector.

20. The method according to claim 19, wherein a first floating tolerance spring is disposed on a side wall of each of the plurality of female standard sub-cavities comprised in the female connector plastic part, the first floating tolerance spring is configured to limit an elastic floating tolerance of the female standard functional module in an X direction, and the X direction is parallel to a mating surface of the female connector and parallel to the top and the bottom of the female connector; and
a second floating tolerance spring is disposed on the fixed baffle plate of the female connector plastic part, the second floating tolerance spring is configured to limit an elastic floating tolerance of the female standard functional module in a Y direction, and the Y direction is parallel to the mating surface of the female connector and perpendicular to the top and the bottom of the female connector.

21. The method according to claim 19 or 20, wherein the female connector plastic part further comprises a module limiting structure, the module limiting structure is located on a lower surface of the female connector, and the module limiting structure is configured to limit a location of the female standard functional module in a Z direction, wherein
the Z direction is perpendicular to the mating surface of the female connector.

22. The method according to any one of claims 19 to 21, wherein the method further comprises: manufacturing a plurality of female standard functional module plastic parts, wherein
a volume of each of the plurality of female standard functional module plastic parts is an integer multiple of that of the female standard sub-cavity;
module guiding corners are disposed around a side, connected to the male standard functional module, of each of the plurality of female standard functional module plastic parts; and
a spring clamping slot is disposed on a side surface of each female standard functional module plastic part, and the side surface of each female standard functional module plastic part is a surface of the female standard functional module in the Z direction, wherein
the Z direction is perpendicular to a mating surface of the female connector plastic part; and
opening molds for the plurality of female standard functional module plastic parts to manufacture a plurality of female standard functional modules.

23. The method according to claim 22, wherein the method further comprises: manufacturing a plurality of male standard functional module plastic parts, wherein
a volume of the male standard functional module plastic part is an integer multiple of that of the male standard sub-cavity, and the plurality of male standard functional module plastic parts and the plurality of female standard functional module plastic parts have corresponding functions; and
opening molds for the plurality of male standard functional module plastic parts to manufacture a plurality of male standard functional modules.

24. The method according to any one of claims 19 to 21, wherein the method further comprises: manufacturing a plurality of male standard functional module plastic parts, wherein
a volume of the male standard functional module plastic part is an integer multiple of that of the male standard sub-cavity; and
opening molds for the plurality of male standard functional module plastic parts to manufacture a plurality of male standard functional modules.

25. The method according to claim 24, wherein the method further comprises: manufacturing a plurality of female standard functional module plastic parts, wherein
a volume of each of the plurality of female standard functional module plastic parts is an integer multiple of that of the female standard sub-cavity, and the plurality of female standard functional module plastic parts and the plurality of male standard functional module plastic parts have corresponding functions;
module guiding corners are disposed around a side, connected to the male standard functional module, of each of the plurality of female standard functional module plastic parts; and
a spring clamping slot is disposed on a side surface of each female standard functional module plastic part, and the side surface of each female standard functional module plastic part is a surface of the female standard functional module in the Z direction, wherein
the Z direction is perpendicular to a mating surface of the female connector plastic part; and
opening molds for the plurality of female standard functional module plastic parts to manufacture a plurality of female standard functional modules.

26. The method according to claim 19, wherein a first floating tolerance spring is disposed on a side wall of each of the plurality of male standard sub-cavities comprised in the male connector plastic part, the first floating tolerance spring is configured to limit an elastic floating tolerance of the male standard functional module in an X direction, and the X direction is parallel to a mating surface of the male connector and parallel to the top and the bottom of the male connector; and
a second floating tolerance spring is disposed on the fixed baffle plate of the male connector, the second floating tolerance spring is configured to limit an elastic floating tolerance of the male standard functional module in a Y direction, and the Y direction is parallel to the mating surface of the male connector and perpendicular to the top and the bottom of the male connector.

27. The method according to claim 26, wherein the male connector plastic part further comprises a module limiting structure, the module limiting structure is located on a lower surface of the male connector, and the module limiting structure is configured to limit a location of the male standard functional module in a Z direction, wherein
the Z direction is perpendicular to the mating surface of the male connector.

28. The method according to claim 26 or 27, wherein the method further comprises: manufacturing a plurality of male standard functional module plastic parts, wherein
a volume of each of the plurality of male standard functional module plastic parts is an integer multiple of that of the male standard sub-cavity;
module guiding corners are disposed around a side, connected to the male standard functional module, of each of the plurality of male standard functional module plastic parts; and
a spring clamping slot is disposed on a side surface of each male standard functional module plastic part, and the side surface of each male standard functional module plastic part is a surface of the male standard functional module in the Z direction, wherein
the Z direction is perpendicular to a mating surface of the male connector plastic part; and
opening molds for the plurality of male standard functional module plastic parts to manufacture a plurality of male standard functional modules.

29. The method according to claim 28, wherein the method further comprises: manufacturing a plurality of female standard functional module plastic parts, wherein
a volume of the female standard functional module plastic part is an integer multiple of that of the female standard sub-cavity, and the plurality of female standard functional module plastic parts and the plurality of male standard functional module plastic parts have corresponding functions; and
opening molds for the plurality of female standard functional module plastic parts to manufacture a plurality of female standard functional modules.

30. The method according to claim 26 or 27, wherein the method further comprises: manufacturing a plurality of female standard functional module plastic parts, wherein
a volume of the female standard functional module plastic part is an integer multiple of that of the female standard sub-cavity; and
opening molds for the plurality of female standard functional module plastic parts to manufacture a plurality of female standard functional modules.

31. The method according to claim 30, wherein the method further comprises: manufacturing a plurality of male standard functional module plastic parts, wherein
a volume of each of the plurality of male standard functional module plastic parts is an integer multiple of that of the male standard sub-cavity, and the plurality of male standard functional module plastic parts and the plurality of male standard functional module plastic parts have corresponding functions; and
module guiding corners are disposed around a side, connected to the male standard functional module, of each of the plurality of male standard functional module plastic parts; and
a spring clamping slot is disposed on a side surface of each male standard functional module plastic part, and the side surface of each male standard functional module plastic part is a surface of the male standard functional module in the Z direction, wherein
the Z direction is perpendicular to a mating surface of the male connector plastic part; and
opening molds for the plurality of male standard functional module plastic parts to manufacture a plurality of male standard functional modules.
